# EUROPEAN PATENT APPLICATION

(11) **EP 4 693 421 A1**
(43) Date of publication of application: **11.02.2026**
(21) Application number: 24784411.1
(22) Date of filing: 03.04.2024
(51) Int. Cl.: H01M 4/02, H01M 50/531, H01M 50/172, H01M 50/186, H01M 50/105

(54) **BATTERY CELL, BATTERY, AND ELECTRICAL APPARATUS**

(30) Priority: 07.04.2023 CN 202310362717
(71) Applicant: Ningde Amperex Technology Limited, Ningde City, Fujian Province 352100 (CN)
(72) Inventor: LIU, Ning, Ningde, Fujian 352100 (CN); WU, Hua, Ningde, Fujian 352100 (CN); CAO, Weiyi, Ningde, Fujian 352100 (CN)
(74) Representative: Kraus & Lederer PartGmbB
(86) International application number: PCT/CN2024/086056
(87) International publication number: WO 2024/208329

(57) **Abstract**

Some embodiments of this application provide a battery cell, a battery, and an electric apparatus. The battery cell includes a packaging bag, a first electrode plate, and a second electrode plate. A second portion of the packaging bag is recessed with respect to a first portion to form a first concave portion on an outer surface of the packaging bag. A second zone of the second electrode plate is recessed with respect to a first zone to form a second concave portion on the second electrode plate. In an extending direction of a first tab, a dimension by which the first zone extends beyond the first electrode plate is denoted as a1, a dimension by which the second zone extends beyond the first electrode plate is denoted as a2, a distance from a second coating zone to the first portion is denoted as b1, and a distance from the second coating zone to the second portion is denoted as b2, satisfying 0.2 mm ≤ a1 - a2 ≤ 4 mm and 0.3 mm ≤ b1 - b2 ≤ 7 mm. The space occupied by the second electrode plate can be reduced, and a distance from the second portion of the packaging bag to the second coating zone of the second electrode plate can be reduced, so that the space occupied by the battery cell can be reduced, and the energy density of the battery is increased, thereby improving the endurance of the electric apparatus.

## Description

### CROSS-REFERENCE TO RELATED APPLICATIONS

This application claims priority to Chinese Patent Application No. 202310362717.X, filed on April 07, 2023 and entitled "BATTERY CELL, BATTERY, AND ELECTRIC APPARATUS", which is incorporated herein by reference in its entirety.

### TECHNICAL FIELD

This application relates to the field of battery technologies, and specifically, to a battery cell, a battery, and an electric apparatus.

### BACKGROUND

As electronic information technology develops rapidly, various electronic devices are also developing towards intelligence and multi-functionality, and the demand for battery energy density has also become increasingly high. Therefore, how the energy density of batteries is increased has become an urgent problem to be addressed in the battery field.

### SUMMARY

Some embodiments of this application are intended to provide a battery cell, a battery, and an electric apparatus, so as to reduce space occupied by the battery cell and increase energy density of the battery.

According to a first aspect, an embodiment of this application provides a battery cell including a packaging bag, where the packaging bag includes a first portion and a second portion, the second portion is connected with the first portion, and the second portion is recessed in a first direction with respect to the first portion to form a first concave portion on an outer surface of the packaging bag. A first electrode plate and a second electrode plate are accommodated within the packaging bag, where the first electrode plate includes a first coating zone and a first tab connected to the first coating zone; the second electrode plate includes a second coating zone, the second coating zone includes a first zone and a second zone, and the second zone is recessed in the first direction with respect to the first zone to form a second concave portion on the second electrode plate; a second tab is connected to the first zone; and the first tab is connected to a first conductive member, the second tab is connected to a second conductive member, the first portion contains a first sealing portion, the second portion contains a second sealing portion, and the first conductive member and the second conductive member come out through the first sealing portion. In an extending direction of the first tab, an orthographic projection of the first zone is located within a projection of the first portion; in the extending direction of the first tab, a dimension by which the first zone extends beyond the first electrode plate is denoted as a1, and a dimension by which the second zone extends beyond the first electrode plate is denoted as a2; and in the extending direction of the first tab, a distance from the second coating zone to the first portion is denoted as b1, and a distance from the second coating zone to the second portion is denoted as b2, satisfying: 0.2 mm ≤ a1 - a2 ≤ 4 mm, 0.1 mm ≤ a2, 0.3 mm ≤ b1 - b2 ≤ 7 mm, and b2 ≤ 3 mm; where the extending direction of the first tab is opposite to the first direction.

In the foregoing technical solution, the second portion of the packaging bag is recessed with respect to the first portion of the packaging bag to form the first concave portion on the outer surface of the packaging bag, so that other components of the battery can be disposed in the first concave portion, enabling a more compact structure of the battery and contributing to increasing the energy density of the battery.

In the extending direction of the first tab, the dimension a1 by which the first zone of the second coating zone of the second electrode plate extends beyond the first electrode plate and the dimension a2 by which the second zone of the second coating zone of the second electrode plate extends beyond the first electrode plate satisfy 0.2 mm ≤ a1 - a2 ≤ 4 mm and 0.1 mm ≤ a2. To fully utilize the capacity of the battery cell, the first coating zone and second coating zone of the second electrode plate need to extend beyond the first electrode plate, while part of an active material coating is applied on a bottom end of the first tab during coating due to dimensional fluctuation. In the first zone, there is a risk that the active material coating applied on the bottom end of the first tab comes into contact with the second electrode plate due to dimensional fluctuation. When 0.2 mm ≤ a1 - a2 ≤ 4 mm and 0.1 mm ≤ a2, the foregoing safety risk can be reduced and the utilization of the capacity of the battery cell can be guaranteed. In addition, a difference between the dimension by which the first zone exceeds beyond the first electrode plate and the dimension by which the second zone exceeds beyond the first electrode plate can be made large to facilitate the formation of a depression with large space, so that a corresponding depression with large space can also be formed on the packaging bag, facilitating the accommodation of other components and increasing the energy density of the battery cell. Furthermore, the influence on the dimension of the first coating zone can be reduced, thereby reducing the influence on the energy density of the battery. If a1 - a2 is small (for example, less than 0.2 mm), there is a risk in the first zone that the active material coating applied on the bottom end of the first tab comes into contact with the second electrode plate due to dimensional fluctuation. The second coating zone is limited in dimension, and therefore, if a1 - a2 is large (for example, greater than 4 mm), the corresponding first coating zone is further reduced in dimension, thereby affecting the energy density of the battery.

In the extending direction of the first tab, the distance b1 from the second coating zone of the second electrode plate to the first portion of the packaging bag and the distance b2 from the second coating zone of the second electrode plate to the second portion of the packaging bag satisfy 0.3 mm ≤ b1 - b2 ≤ 7 mm. In the first portion, b1 needs to reach a certain dimension to accommodate the first tab, the second tab, a portion of the first conductive member, and a portion of the second conductive member, while in the second portion, since there is no need to accommodate other elements, the value of b2 can be reduced to increase the energy density. When 0.3 mm ≤ b1 - b2 ≤ 7 mm and b2 ≤ 3 mm, there is enough space between the first portion and the second coating zone to accommodate the first tab, the second tab, a portion of the first conductive member, and a portion of the second conductive member, and in addition, a difference between the first portion and the second portion in the extending direction of the first tab is large, facilitating the formation of a space for accommodating other components on the packaging bag and further increasing the energy density. If b1 - b2 is small (for example, less than 0.3 mm), the difference between the first portion and the second portion in the extending direction of the first tab is small, and it is difficult to accommodate the first tab, the second tab, a portion of the first conductive member, and a portion of the second conductive member. If b1 - b2 is large (for example, greater than 7 mm), b2 is too small, and the flow of an electrolyte between the packaging bag, the first electrode plate, and the second electrode plate is affected; or b1 is too large, the space occupied by a gap between the first portion and the second coating zone is increased, making the overall volume of the battery cell larger, and this is not conducive to increasing the energy density of the battery.

In some embodiments of the first aspect, in the extending direction of the first tab, a dimension of the first portion is denoted as M1, a dimension of the second portion is denoted as M2, and a dimension of the first zone is denoted as L1, satisfying L1 ≤ M2 ≤ M1.

In the foregoing technical solution, in the extending direction of the first tab, the dimension of the first portion is denoted as M1, the dimension of the second portion is denoted as M2, and the dimension of the first zone is denoted as L1, satisfying L1 ≤ M2 ≤ M1. In this way, the first concave portion can be formed on the outer surface of the packaging bag so that other components of the battery can be disposed in the first concave portion, enabling a more compact structure of the battery and contributing to increasing the energy density of the battery. In addition, the dimension of the second electrode plate can be made larger, thereby increasing the energy density of the battery.

In some embodiments of the first aspect, in the extending direction of the first tab, a dimension of the first sealing portion is denoted as c1, and a dimension of the second sealing portion is denoted as c2, satisfying 0.5 mm ≤ c1 - c2 ≤ 3 mm and 1.5 mm ≤ c2.

In the foregoing solution, 0.5 mm ≤ c1 - c2 ≤ 3 mm and 1.5 mm ≤ c2. This enables the second sealing portion to provide good packaging, improves the packaging effect of the first sealing portion to reduce the risk of liquid leakage. In addition, this can improve the packaging effect of the second sealing portion or reduce the space occupied by the first portion, thereby increasing the energy density of the battery cell. If c1 - c2 is small (for example, less than 0.5 mm), c2 is large, and the space occupied is large; or c1 is small, and the packaging effect on the first tab and the second tab is poor, resulting in liquid leakage. If c1 - c2 is large (for example, greater than 3 mm), c2 is small, and the packaging effect is poor; or c1 is large and the space occupied is large, and this is not conducive to increasing the energy density of the battery.

In some embodiments of the first aspect, 0.5 mm ≤ a1 - a2 ≤ 1.5 mm.

In the foregoing solution, 0.5 mm ≤ a1 - a2 ≤ 1.5 mm. This can reduce the risk that the active material coating applied on the bottom end of the first tab comes into contact with the second electrode plate and reduce the influence on the dimension of the first coating zone, while further forming a second concave portion with large space on the second electrode plate.

In some embodiments of the first aspect, 0.3 mm ≤ a1 ≤ 7 mm, and 0.1 mm ≤ a2 ≤ 3 mm.

In the foregoing solution, 0.3 mm ≤ a1 ≤ 7 mm and 0.1 mm ≤ a2 ≤ 3 mm. This enables the second coating zone to extend beyond the first coating zone, alleviating the problem of easy precipitation of metal ions. In addition, this can avoid taking up too much space. If a1 is small (for example, less than 0.3 mm) and a2 is small (for example, less than 0.1 mm), an excessively small area of the second coating zone extending beyond the first coating zone is prone to the problem of metal ion precipitation; or if a1 is large (for example, greater than 7 mm) and a2 is large (for example, greater than 3 mm), the second coating zone occupies a large space, resulting in space waste, and this is not conducive to increasing the energy density of the battery.

In some embodiments of the first aspect, 0.5 mm ≤ b1 - b2 ≤ 2 mm.

With 0.5 mm ≤ b1 - b2 ≤ 2 mm, when the structure is applied to a small battery cell, the first tab, the second tab, the first conductive member, and the second conductive member are small, and the required accommodation space is small. This design facilitates the accommodation of the first tab, the second tab, a portion of the first conductive member, and a portion of the second conductive member between the first portion and the second coating zone, further allows for a larger difference between the first portion and the second portion in the extending direction of the first tab, forms a space for accommodating other components on the packaging bag, and prevents an energy density loss due to an excessively large b1.

In some embodiments of the first aspect, 0.6 mm ≤ b1 ≤ 10 mm, and 0.2 mm ≤ b2 ≤ 3 mm.

In the foregoing solution, 0.6 mm ≤ b1 ≤ 10 mm. This allows for the formation of a space between the first portion and the second coating zone to accommodate a portion of the first tab and the first conductive member and a portion of the second tab and the second conductive member. In addition, this can reduce the space occupied by the gap between the first portion and the second coating zone. If b1 is small (for example, less than 0.6 mm), it is difficult to accommodate the first tab, the second tab, a portion of the first conductive member, and a portion of the second conductive member within the packaging bag; or if b1 is large (for example, greater than 10 mm), a large space occupied by the gap between the first portion and the second coating zone makes the overall volume of the battery cell larger, and this is not conducive to increasing the energy density of the battery.

In the foregoing solution, 0.2 mm ≤ b2 ≤ 3 mm. This allows for the formation of the gap between the second portion and the second coating zone for the electrolyte to flow. In addition, this can reduce the space occupied by the gap between the second portion and the second coating zone. If b2 is small (for example, less than 0.2 mm), it is difficult for the electrolyte to flow between the packaging bag, the first electrode plate, and the second electrode plate; or if b2 is large (for example, greater than 3 mm), a large space occupied by the gap between the second portion and the second coating zone makes the overall volume of the battery cell larger, and this is not conducive to increasing the energy density of the battery.

In some embodiments of the first aspect, 2.5 mm < c1 ≤ 4.5 mm, and c2 ≤ 3 mm.

In the foregoing solution, 2.5 mm < c1 ≤ 4.5 mm and c2 ≤ 3 mm. This enables the packaging bag to provide a better packaging effect and can reduce the space occupied. If c1 is small (for example, less than 2.5 mm), the packaging effect of the first sealing portion is poor, and there may be a risk of electrolyte leakage; or if c1 is large (for example, greater than 4.5 mm) and c2 is large (for example, greater than 3 mm), the space occupied is large, and this is not conducive to increasing the energy density of the battery.

In some embodiments of the first aspect, the first sealing portion and the second sealing portion are located at a same end in the extending direction of the first tab.

In the foregoing technical solution, the first sealing portion and the second sealing portion are located at a same end in the extending direction of the first tab, so that the packaging bag can have a depression formed at the end at which the first sealing portion and the second sealing portion are located, reducing the space occupied by the battery cell and increasing the energy density of the battery.

In some embodiments of the first aspect, the first electrode plate is a positive electrode plate and the second electrode plate is a negative electrode plate; alternatively, the first electrode plate is a negative electrode plate and the second electrode plate is a positive electrode plate.

In some embodiments of the first aspect, in the extending direction of the first tab, a dimension of the first zone is denoted as L1, and a dimension of the second zone is denoted as L2, satisfying 0.2 mm ≤ L1 - L2 ≤ 2.9 mm.

In the foregoing solution, in the extending direction of the first tab, the dimension L1 of the first zone and the dimension L2 of the second zone satisfy 0.2 mm ≤ L1 - L2 ≤ 2.9 mm. This enables a large difference in dimension between the first zone and the second zone in the extending direction of the first tab, facilitating the formation of a space for accommodating other components on the corresponding packaging bag. In addition, this can prevent an energy density loss of the battery caused by an excessive difference in dimension between the first zone and the second zone in the extending direction of the first tab. If L1 - L2 is small (for example, less than 0.2 mm), the difference in dimension between the first zone and the second zone in the extending direction of the first tab is small, and a difference in dimension between portions of the packaging bag corresponding to the first zone and the second zone in the extending direction of the first tab is also small, making it difficult to form a space for accommodating other components; or if L1 - L2 is large (for example, greater than 2.9 mm), an area of the first coating zone corresponding to the second coating zone needs to be set small, thereby affecting the energy density of the battery.

In some embodiments of the first aspect, the first electrode plate is rectangular.

In the foregoing solution, the first electrode plate is rectangular, so that the preparation process of the first electrode plate is simple and the preparation efficiency is high.

In some embodiments of the first aspect, the battery cell further includes a separator. The separator is disposed between the first electrode plate and the second electrode plate. The separator has a first end close to the first tab and the second tab, the first end including a third zone and a fourth zone. The third zone protrudes from the fourth zone. When viewed in the extending direction of the first tab, an orthographic projection of the third zone is located within a projection of the first portion.

In the foregoing solution, the third zone of the separator at the first end close to the first tab and the second tab protrudes from the fourth zone. When viewed in the extending direction of the first tab, the orthographic projection of the third zone is located within the projection of the first portion, so that the protruding third zone can be accommodated in the space of a gap with larger spacing between the second coating zone and the first portion, reducing the space occupied while providing better separation between the first electrode plate and the second electrode plate.

In some embodiments of the first aspect, two first portions are provided, and the two first portions are spaced apart in a width direction of the battery cell. The first conductive member comes out through one first portion, and the second conductive member comes out through the other first portion.

In the foregoing solution, two first portions are provided, and the two first portions are spaced apart in the width direction of the battery cell. The first tab comes out through one first portion, and the second tab comes out through the other first portion, facilitating the arrangement of the first tab and the second tab and the packaging of the packaging bag.

According to a second aspect, an embodiment of this application provides a battery including:
the battery cell described above; and
a protection board, where the protection board is disposed on the packaging bag, the protection board includes a main body portion and a convex portion, the convex portion protrudes from the main body portion in a direction away from the extending direction of the first tab, and the convex portion is embedded into the first concave portion.

In the foregoing solution, the first concave portion is formed on the outer surface of the packaging bag, and the convex portion of the protection board is embedded in the first concave portion, so that the structure of the battery can be more compact, and the energy density of the battery can be increased, thereby improving the endurance of the electric apparatus.

In some embodiments of the second aspect, in the extending direction of the first tab, a dimension of the first sealing portion is denoted as c1, a dimension of the second sealing portion is denoted as c2, a dimension of the main body portion in the extending direction of the first tab is denoted as d1, and a dimension of the convex portion in the extending direction of the first tab is denoted as d2, satisfying 1.5 mm ≤ d1 ≤ 15 mm and 0 < d2 ≤ a1 - a2 + b1 - b2 + c1 - c2 mm.

In the foregoing solution, the dimension d1 of the main body portion in the extending direction of the first tab satisfies 1.5 mm ≤ d1 ≤ 15 mm. This facilitates the arrangement of components on the main body portion and can reduce the space occupied. If d1 is small (for example, less than 1.5 mm), it is difficult to dispose components on the main body portion; or if d1 is large (for example, greater than 15 mm), the space occupied is large, and this is not conducive to increasing the energy density of the battery.

In the foregoing solution, the dimension d2 of the convex portion in the extending direction of the first tab satisfies 0 < d2 ≤ a1 - a2 + b1 - b2 + c1 - c2 mm, so that the convex portion can fit the first concave portion of the packaging bag of the battery cell, reducing the space occupied by the battery and facilitating the arrangement of components on the convex portion. If d2 is small (for example, equal to 0), the convex portion cannot fit the first concave portion of the packaging bag of the battery cell, the space occupied by the protection board is increased, so that the space occupied by the battery is increased, and this is not conducive to increasing the energy density of the battery; or if d2 is large (for example, greater than a1 - a2 + b1 - b2 + c1 - c2 mm), the convex portion also cannot fit the first concave portion of the packaging bag of the battery cell, causing a gap between the main body portion and the packaging bag and a waste of space, and this is not conducive to increasing the energy density of the battery.

According to a third aspect, an embodiment of this application provides an electric apparatus including the foregoing battery, where the battery is configured to supply electric energy.

### BRIEF DESCRIPTION OF DRAWINGS

In order to describe the technical solutions in some embodiments of this application more clearly, the following briefly describes the accompanying drawings required for describing these embodiments of this application. It is appreciated that the accompanying drawings below only show some embodiments of this application and thus should not be considered as limitations on the scope. Persons of ordinary skill in the art may still derive other related drawings from the accompanying drawings without creative efforts.
FIG. 1 is a schematic three-dimensional structural diagram of a battery cell according to an embodiment of this application;
FIG. 2 is a schematic exploded structural view of a battery cell according to an embodiment of this application;
FIG. 3 is a front schematic structural diagram of a battery cell according to an embodiment of this application;
FIG. 4 is a front schematic structural diagram of a packaging bag of a battery cell according to an embodiment of this application;
FIG. 5 is a front schematic structural diagram of a first electrode plate of a battery cell according to an embodiment of this application;
FIG. 6 is a front schematic structural diagram of a second electrode plate of a battery cell according to an embodiment of this application;
FIG. 7 is a front schematic structural diagram of a partial structure of a battery cell according to an embodiment of this application;
FIG. 8 is a front schematic structural diagram of a separator of a battery cell according to an embodiment of this application;
FIG. 9 is a front schematic structural diagram of a partial structure of another battery cell according to an embodiment of this application;
FIG. 10 is a front schematic structural diagram of a partial structure of another battery cell according to an embodiment of this application;
FIG. 11 is a front schematic structural diagram of a partial structure of another battery cell according to an embodiment of this application;
FIG. 12 is a front schematic structural diagram of a partial structure of another battery cell according to an embodiment of this application;
FIG. 13 is a front schematic structural diagram of a battery according to an embodiment of this application; and
FIG. 14 is a front schematic structural diagram of a protection board of a battery according to an embodiment of this application.

Reference signs: 10. battery cell; 110. first electrode plate; 111. first coating zone; 112. first tab; 113. first conductive member; 120. second electrode plate; 121. second coating zone; 1211. first zone; 1212. second zone; 122. second tab; 123. second conductive member; 130. second concave portion; 140. second electrode plate; 150. separator; 151. third zone; 152. fourth zone; 200. packaging bag; 201. first packaging film; 202. second packaging film; 210. first portion; 211. first sealing portion; 220. second portion; 221. second sealing portion; 230. first concave portion; 20. protection board; 300. main body portion; and 400. convex portion.

### DESCRIPTION OF EMBODIMENTS

The following describes in detail some embodiments of technical solutions of this application with reference to the accompanying drawings. Apparently, the described embodiments are merely some but not all of these embodiments of this application. The following embodiments can be used as examples to describe the technical solutions in this application more explicitly, and do not constitute any limitation on the protection scope of this application. It can be understood by those skilled in the art that in absence of conflicts, the following embodiments and features in these embodiments may be combined.

In the descriptions of some embodiments of this application, unless otherwise specified and defined explicitly, the technical term "connection" may refer to a direct connection or an indirect connection via an intermediate medium. Persons of ordinary skill in the art can understand specific meanings of these terms in this application as appropriate to specific situations.

The term "and/or" in this specification is only an associative relationship for describing associated objects, indicating that three relationships may be present. For example, A and/or B may indicate three cases: presence of only A; presence of both A and B; and presence of only B. In this application, "a plurality of" means two or more.

Currently, from a perspective of market development, secondary batteries are more widely applied. Secondary batteries have been widely used in electric transportation tools such as electric bicycles, electric motorcycles, and electric vehicles, as well as in many other fields such as electric tools, drones, and energy storage devices. With continuous expansion of application fields of secondary batteries, market demands for the secondary batteries are also expanding.

The inventors have noted that in the current prismatic battery cell structure, a positive electrode plate and a negative electrode plate of an electrode assembly and a packaging bag accommodating the electrode assembly are generally disposed in a regular rectangle, and at an end where a positive electrode tab and a negative electrode tab are disposed, a gap between the packaging bag and the electrode assembly is large to accommodate a portion of the positive electrode tab and the negative electrode tab. However, the positive electrode tab and the negative electrode tab only occupy a portion of the end of the packaging bag and the electrode assembly, and in other portions without the positive electrode tab and the negative electrode tab, the gap between the packaging bag and the electrode assembly causes space waste and limits the increase of the energy density of the battery.

Based on the above considerations, to increase the energy density of the battery, the inventors have designed, through in-depth research, a battery cell including a packaging bag, and a first electrode plate and a second electrode plate that are accommodated within the packaging bag, where the packaging bag includes a first portion and a second portion, the second portion is connected to the first portion, and the second portion is recessed with respect to the first portion to form a first concave portion on the outer surface of the packaging bag; the first electrode plate includes a first coating zone and a first tab connected to the first coating zone; the second electrode plate includes a second coating zone, where the second coating zone includes a first zone and a second zone, and the second zone is recessed with respect to the first zone to form a second concave portion on the second electrode plate; a second tab is connected to the first zone; and the first tab is connected to a first conductive member, the second tab is connected to a second conductive member, and the first conductive member and the second conductive member come out through the first portion; where in an extending direction of the first tab, an orthographic projection of the first zone is located within a projection of the first portion; in the extending direction of the first tab, a dimension by which the first zone extends beyond the first electrode plate is denoted as a1, and a dimension by which the second zone extends beyond the first electrode plate is denoted as a2; and in the extending direction of the first tab, a distance from the second coating zone to the first portion is denoted as b1, and a distance from the second coating zone to the second portion is denoted as b2, satisfying: 0.2 mm ≤ a1 - a2 ≤ 4 mm, 0.1 mm ≤ a2, 0.3 mm ≤ b1 - b2 ≤ 7 mm, and b2 ≤ 3 mm. The space occupied by portions of the second electrode plate without the first tab and the second tab can be reduced, and a distance from the second portion of the packaging bag without the first tab and the second tab to the second coating zone of the second electrode plate can be reduced, so that the space occupied by the battery cell can be reduced; and the battery cell protection board with the convex portion is disposed, and the first concave portion is configured to accommodate the convex portion, so that the energy density of the battery is increased, the battery with the protection board is still rectangular, and the energy density of the battery can be further increased.

An embodiment of this application provides an electric apparatus that uses a battery as a power source. The electric apparatus may be but is not limited to a drone, an electric transportation tool, an electric tool, or an energy storage device. Drones can include agricultural drones, industrial drones, consumer drones, and the like. Electric transportation tools can include electric vehicles, electric motorcycles, electric bicycles, electric vessels, and the like.

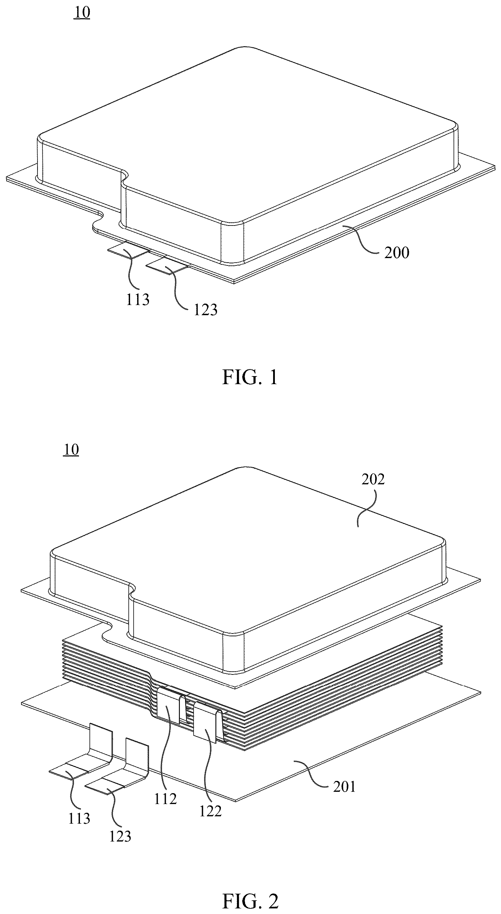

As shown in FIG. 1 to FIG. 7, an embodiment of this application provides a battery cell 10 including a first electrode plate 110, a second electrode plate 120, and a packaging bag 200. The packaging bag 200 includes a first portion 210 and a second portion 220. The second portion 220 is connected to the first portion 210. The second portion 220 is recessed with respect to the first portion 210 to form a first concave portion 230 on an outer surface of the packaging bag 200. The first electrode plate 110 and the second electrode plate 120 are accommodated within the packaging bag 200. The first electrode plate 110 includes a first coating zone 111 and a first tab 112 connected to the first coating zone 111. The second electrode plate 120 includes a second coating zone 121. The second coating zone 121 includes a first zone 1211 and a second zone 1212, and the second zone 1212 is recessed with respect to the first zone 1211 to form a second concave portion 130 on the second electrode plate 120. A second tab 122 is connected to the first zone 1211. The first tab 112 is connected to a first conductive member 113, and the second tab 122 is connected to a second conductive member 123. The first portion includes a first sealing portion 211 and the second portion includes a second sealing portion 221, and the first conductive member 113 and the second conductive member 123 come out through the first sealing portion 211. In the extending direction X of the first tab 112, an orthographic projection of the first zone 1211 is located within a projection of the first portion 210. In the extending direction X of the first tab 112, a dimension by which the first zone 1211 extends beyond the first electrode plate 110 is denoted as a1, and a dimension by which the second zone 1212 extends beyond the first electrode plate 110 is denoted as a2; and in the extending direction X of the first tab 112, a distance from the second coating zone 121 to the first portion 210 is denoted as b1, and a distance from the second coating zone 121 to the second portion 220 is denoted as b2, satisfying: 0.2 mm ≤ a1 - a2 ≤ 4 mm, 0.1 mm ≤ a2, 0.3 mm ≤ b1 - b2 ≤ 7 mm, and b2 ≤ 3 mm. The extending direction of the first tab is opposite to the first direction.

In this embodiment, the distance from the second coating zone 121 to the first portion 210 is a distance from an end portion of the second coating zone 121 close to the first portion 210 to an inner surface of the first portion 210 in the extending direction of the first tab 112. The distance from the second coating zone 121 to the second portion 220 is a distance from an end portion of the second coating zone 121 close to the second portion 220 to an inner surface of the second portion 220 in the extending direction of the first tab 112. In some embodiments, the first tab 112 and the first electrode plate 110 may be fixedly connected by welding or integrally formed. The second tab 122 and the second electrode plate 120 may be fixedly connected by welding or integrally formed.

Each battery cell 10 may be a secondary battery. The secondary battery includes but is not limited to a lithium-ion battery, a sodium-ion battery, a magnesium-ion battery, a solid-state battery, and the like.

The second portion 220 of the packaging bag 200 is recessed with respect to the first portion 210 to form the first concave portion 230 on an outer surface of the packaging bag 200, so that some components of a protection board of the battery can be disposed in the first concave portion 230, enabling a more compact structure of the battery and contributing to increasing the energy density of the battery.

The second electrode plate 120 includes the second coating zone 121. The second coating zone 121 includes the first zone 1211 and the second zone 1212, and the second zone 1212 is recessed with respect to the first zone 1211 to form the second concave portion 130 on the second electrode plate 120. The second tab 122 is connected to the first zone 1211. The first tab 112 is connected to the first conductive member 113, and the second tab 122 is connected to the second conductive member 123. The first conductive member 113 and the second conductive member 123 come out through the first sealing portion 211. In the extending direction X of the first tab 112, the orthographic projection of the first zone 1211 is located within the projection of the first portion 210. In this way, a protruding part of the first zone 1211 with respect to the second zone 1212 can correspond to a protruding part of the first portion 210 with respect to the second portion 220, and the first concave portion 230 formed by the second portion 220 being recessed with respect to the first portion 210 has a larger space, so that the first concave portion 230 can accommodate more or larger components, further improving the compactness of the battery and contributing to increasing the energy density of the battery.

In the extending direction X of the first tab 112, the dimension by which the first zone 1211 extends beyond the first electrode plate 110 is denoted as a1, and the dimension by which the second zone 1212 extends beyond the first electrode plate 110 is denoted as a2, satisfying: 0.1 mm ≤ a2 and 0.2 mm ≤ a1 - a2 ≤ 4 mm. For example, a1 - a2 may be 0.2 mm, 2 mm, 4 mm, or the like. To fully utilize the capacity of the battery cell, the first coating zone 111 and the second coating zone 121 of the second electrode plate 120 need to extend beyond the first electrode plate 110, and a difference between the dimension by which the first zone 1211 extends beyond the first electrode plate 110 and the dimension by which the second zone 1212 extends beyond the first electrode plate 110 can be made large to facilitate the formation of a depression with large space, so that a corresponding depression with large space can also be formed on the packaging bag 200, facilitating the accommodation of other components and reducing a risk that an active material coating on a bottom end of the first tab comes into contact with the second electrode plate 120. In addition, the problem that the dimension of the first coating zone 111 is too small due to the arrangement of the second concave portion 130 can be alleviated, thereby reducing the influence on the energy density of the battery. If a1 - a2 is small (for example, less than 0.2 mm), there is a risk in the first zone 1211 that the active material coating applied on the bottom end of the first tab 112 comes into contact with the second electrode plate 120 due to dimensional fluctuation. The second coating zone 121 is limited in dimension, and therefore, if a1 - a2 is large (for example, greater than 4 mm), the corresponding first coating zone 111 is further reduced in dimension, thereby affecting the energy density of the battery.

In the extending direction X of the first tab 112, the distance from the second coating zone 121 to the first portion 210 is denoted as b1, and the distance from the second coating zone 121 to the second portion 220 is denoted as b2, satisfying 0.3 mm ≤ b1 - b2 ≤ 7 mm. For example, b1 - b2 may be 0.3 mm, 3.2 mm, 7 mm, or the like. In the first portion 210, b1 needs to reach a certain dimension to accommodate the first tab 112, the second tab 122, a portion of the first conductive member 113, and a portion of the second conductive member 123, while in the second portion 220, since there is no need to accommodate other elements, the value of b2 can be reduced to increase the energy density. When 0.3 mm ≤ b1 - b2 ≤ 7 mm and b2 ≤ 3 mm, there is enough space between the first portion and the second coating zone to accommodate the first tab 112, the second tab 122, a portion of the first conductive member 113, and a portion of the second conductive member 123, and a difference between the first portion 210 and the second portion 220 in the extending direction X of the first tab 112 can be made large, facilitating the formation of a space for accommodating other components on the packaging bag 200. If b1 - b2 is small (for example, less than 0.3 mm), the difference between the first portion 210 and the second portion 220 in the extending direction X of the first tab 112 is small, and it is difficult to accommodate the first tab 112, the second tab 122, a portion of the first conductive member 113, and a portion of the second conductive member 123. If b1 - b2 is large (for example, greater than 7 mm), b2 is too small, and the flow of an electrolyte between the packaging bag 200, the first electrode plate 110, and the second electrode plate 120 is affected; or b1 is too large, the space occupied by a gap between the first portion 210 and the second coating zone 121 is increased, making the overall volume of the battery cell 10 larger, and this is not conducive to increasing the energy density of the battery.

In some embodiments, the battery cell 10 includes a plurality of first tabs 112 and a plurality of second tabs 122. For a battery cell 10 with a larger dimension, the number of the first tabs 112 and the second tabs 122 is greater, the first conductive member 113 connected to the first tab 112 and the second conductive member 123 connected to the second tab 122 are larger in dimension, more space is occupied by the first tabs 112, the second tabs 122, the first conductive member 113, and the second conductive member 123, the dimension of b1 increases accordingly in the extending direction of the first tab 112, and the corresponding value of b1 - b2 can increase accordingly. Conversely, if the battery cell 10 is small in dimension, the values of b1 and b1 - b2 may be small. Therefore, in some smaller battery cells, 0.5 mm ≤ b1 - b2 ≤ 2 mm. In this case, the first tab 112, the second tab 122, the first conductive member 113, and the second conductive member 123 are small, and the required accommodation space is small. This design facilitates the accommodation of the first tab 112, the second tab 122, a portion of the first conductive member 113, and a portion of the second conductive member 123 between the first portion 210 and the second coating zone 121, further allows for a larger difference between the first portion 210 and the second portion 220 in the extending direction of the first tab 112, forms a space for accommodating other components on the packaging bag, and prevents an energy density loss due to an excessively large b1.

In some embodiments, in the extending direction X of the first tab 112, a dimension of the first portion 210 is denoted as M1, a dimension of the second portion 220 is denoted as M2, and a dimension of the first zone 1211 is denoted as L1, satisfying L1 ≤ M2 ≤ M1.

In the extending direction X of the first tab 112, the dimension of the first portion 210 is denoted as M1, the dimension of the second portion 220 is denoted as M2, and the dimension of the first zone 1211 is denoted as L1, satisfying L1 ≤ M2 ≤ M1. In this way, the first concave portion 230 can be formed on the outer surface of the packaging bag 200 so that other components of the battery can be disposed in the first concave portion 230, enabling a more compact structure of the battery and contributing to increasing the energy density of the battery. In addition, the dimension of the second electrode plate 120 can be made larger, thereby increasing the energy density of the battery. The battery formed by the assembly of the battery cell 10 and the protection board 20 may be in a regular square shape, facilitating the assembly of the battery into an electric apparatus.

In some embodiments, the first portion 210 includes a first sealing portion 211, and the second portion 220 includes a second sealing portion 221. In the extending direction of the first tab 112, a dimension of the first sealing portion 211 is denoted as c1, and a dimension of the second sealing portion 221 is denoted as c2, satisfying 0.5 mm ≤ c1 - c2 ≤ 3 mm and 1.5 mm ≤ c2.

0.5 mm ≤ c1 - c2 ≤ 3 mm and 1.5 mm ≤ c2. For example, c1 - c2 may be 0.5 mm, 1.8 mm, 3 mm, or the like; and c2 may be 1.5 mm, 1.8 mm, 3 mm, or the like. This enables the second sealing portion 221 to provide good packaging, improves the packaging effect of the first sealing portion 211 to reduce the risk of liquid leakage. In addition, this can improve the packaging effect of the second portion 220 or reduce the space occupied by the first portion 210, thereby increasing the energy density of the battery cell 10. If c1 - c2 is small (for example, less than 0.5 mm), c2 is large, and the space occupied is large; or c1 is small, and the packaging effect on the first tab 112 and the second tab 122 is poor, resulting in liquid leakage. If c1 - c2 is large (for example, greater than 3 mm), c2 is small, and the packaging effect is poor; or c1 is large and the space occupied is large, and this is not conducive to increasing the energy density of the battery.

In some embodiments, 0.5 mm ≤ a1 - a2 ≤ 1.5 mm. For example, a1 - a2 may be 0.5 mm, 1 mm, 1.5 mm, or the like. This can reduce the risk of the active material coating applied on the bottom end of the first tab 112 coming into contact with the second electrode plate 120 and reduce the influence on the dimension of the first coating zone 111, while further forming a second concave portion 130 with large space on the second electrode plate 120.

In some embodiments, 0.3 mm ≤ a1 ≤ 7 mm and 0.1 mm ≤ a2 ≤ 3 mm. For example, a1 may be 0.3 mm, 4 mm, 7mm, or the like, and a2 may be 0.1 mm, 1.3 mm, 3 mm, or the like. This enables the second coating zone 121 to extend beyond the first coating zone 111, alleviating the problem of easy precipitation of metal ions. In addition, this can avoid taking up too much space. If a1 is small (for example, less than 0.3 mm) and a2 is small (for example, less than 0.1 mm), an excessively small area of the second coating zone 121 extending beyond the first coating zone 111 is prone to the problem of metal ion precipitation. If a1 is large (for example, greater than 7 mm) and a2 is large (for example, greater than 3 mm), the second coating zone 121 occupies a large space, resulting in space waste, and this is not conducive to increasing the energy density of the battery.

In some embodiments, 0.5 mm ≤ a1 ≤ 3 mm and 0.1 mm ≤ a2 ≤ 1.5 mm. For example, a1 may be 0.5 mm, 2 mm, 3 mm, or the like, and a2 may be 0.1 mm, 0.8 mm, 1.5 mm, or the like. This can further alleviate the problem of easy precipitation of metal ions while avoiding taking up too much space.

In some embodiments, 0.5 mm ≤ b1 - b2 ≤ 2 mm. For example, b1 - b2 may be 0.5 mm, 1.2 mm, 2 mm, or the like. This can further form a space for accommodating other components on the packaging bag 200 while reducing the influence on the flow of electrolyte in the packaging bag 200 or reducing the space occupied by the gap between the first portion 210 and the second coating zone 121.

In some embodiments, 0.6 mm ≤ b1 ≤ 10 mm. For example, b1 may be 0.6mm, 5 mm, or 10 mm, or the like. This allows for the formation of a space between the first portion 210 and the second coating zone 121 to accommodate a portion of the first tab 112 and a portion of the second tab 122. In addition, this can reduce the space occupied by the gap between the first portion 210 and the second coating zone 121. If b1 is small (for example, less than 0.6 mm), it is difficult to accommodate the first tab 112, the second tab 122, a portion of the first conductive member 113, and a portion of the second conductive member 123 within the packaging bag 200. If b1 is large (for example, greater than 10 mm), a large space occupied by the gap between the first portion 210 and the second coating zone 121 makes the overall volume of the battery cell 10 larger, and this is not conducive to increasing the energy density of the battery.

In some embodiments, 1.2 mm ≤ b1 ≤ 3 mm. For example, b1 may be 1.2 mm, 2 mm, 3 mm, or the like. This can further allow for the formation of a space between the first portion 210 and the second coating zone 121 to accommodate a portion of the first tab 112, the second tab 122, a portion of the first conductive member 113, and a portion of the second conductive member 123 while reducing the space occupied by the gap between the first portion 210 and the second coating zone 121.

In some embodiments, 0.2 mm ≤ b2 ≤ 3 mm. For example, b2 may be 0.2 mm, 1.4 mm, 3 mm, or the like. This allows for the formation of the gap between the second sealing portion 221 and the second coating zone 121 for the electrolyte to flow. In addition, this can reduce the space occupied by the gap between the second sealing portion 221 and the second coating zone 121. If b2 is small (for example, less than 0.2 mm), it is difficult for the electrolyte to flow between the packaging bag 200, the first electrode plate 110, and the second electrode plate 120. If b2 is large (for example, greater than 3 mm), a large space occupied by the gap between the second sealing portion 221 and the second coating zone 121 makes the overall volume of the battery cell 10 larger, and this is not conducive to increasing the energy density of the battery.

In some embodiments, 0.2 mm ≤ b2 ≤ 1 mm. For example, b2 may be 0.2 mm, 0.7 mm, 1 mm, or the like. This can further facilitate the flow of the electrolyte between the second sealing portion 221 and the second coating zone 121 while reducing the space occupied by the gap between the second portion 220 and the second coating zone 121.

In some embodiments, 2.5 mm < c1 ≤ 4.5 mm and c2 ≤ 3 mm. For example, c1 may be 2.5 mm, 3 mm, 4.5 mm, or the like, and c2 may be 1.5 mm, 2 mm, 3 mm, or the like. This enables the packaging bag 200 to provide a better packaging effect and can reduce the space occupied. If c1 is small (for example, less than 2.5 mm), the packaging effect of the first portion 210 is poor, and there may be a risk of electrolyte leakage. If c1 is large (for example, greater than 4.5 mm) and c2 is large (for example, greater than 3 mm), the space occupied is large, and this is not conducive to increasing the energy density of the battery.

In some embodiments, the first sealing portion 211 and the second sealing portion 221 are located at a same end in the extending direction X of the first tab 112.

The first sealing portion 211 and the second sealing portion 221 are located at a same end in the extending direction X of the first tab 112, so that the packaging bag 200 can have a depression formed at the end at which the first sealing portion 211 and the second sealing portion 221 are located, reducing the space occupied by the battery cell 10 and increasing the energy density of the battery.

In some embodiments, the first electrode plate 110 is a positive electrode plate, and the second electrode plate 120 is a negative electrode plate.

Since the area of the positive electrode plate is generally smaller than that of the negative electrode plate, the distance from the second coating zone 121 to the packaging bag 200 is a distance from an effective region of the second electrode plate 120 for implementation of charging and discharging to the packaging bag 200 along the first tab 112. The distance b1 from the second coating zone 121 to the first portion 210 and the distance b2 from the second coating zone 121 to the second portion 220 satisfying b2 < b1 enables the first portion 210 and the second portion 220 to form a drop in the extending direction X of the first tab 112, reducing the space occupied by the battery cell 10.

In other embodiments, the first electrode plate 110 may alternatively be a negative electrode plate and the second electrode plate 120 may be a positive electrode plate. This is not limited herein.

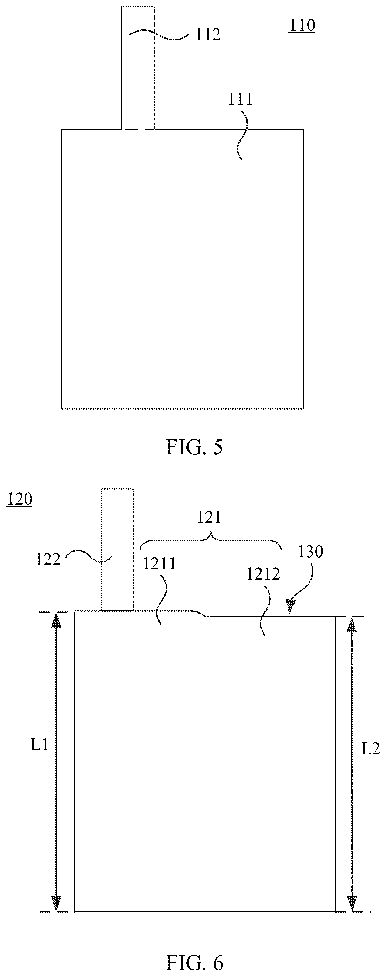

As shown in FIG. 6, in some embodiments, in the extending direction of the first tab 112, a dimension of the first zone 1211 is denoted as L1, and a dimension of the second zone 1212 is denoted as L2, satisfying 0.2 mm ≤ L1 - L2 ≤ 2.9 mm. For example, L1 - L2 may be 0.2 mm, 1.5 mm, 2.9 mm, or the like. This enables a large difference in dimension between the first zone 1211 and the second zone 1212 in the extending direction X of the first tab 112, facilitating the formation of a space for accommodating other components on the corresponding packaging bag 200. In addition, this can prevent an energy density loss of the battery caused by an excessive difference in dimension between the first zone 1211 and the second zone 1212 in the extending direction X of the first tab 112. If L1 - L2 is small (for example, less than 0.2 mm), the difference in dimension between the first zone 1211 and the second zone 1212 in the extending direction X of the first tab 112 is small, and a difference in dimension between portions of the packaging bag 200 corresponding to the first zone 1211 and the second zone 1212 in the extending direction X of the first tab 112 is also small, making it difficult to form a space for accommodating other components. If L1 - L2 is large (for example, greater than 2.9 mm), an area of the first coating zone 111 corresponding to the second coating zone 121 needs to be set small, thereby affecting the energy density of the battery.

In some embodiments, the first electrode plate 110 is rectangular.

The first electrode plate 110 is rectangular, so that the preparation process of the first electrode plate 110 is simple and the preparation efficiency is high.

In some other embodiments, the first electrode plate 110 may alternatively be set in a rectangle-like shape. This is not limited herein.

In some other embodiments, the second zone 1212 of the first electrode plate 110 corresponding to the second electrode plate 120 may also form a depression. This is not limited herein.

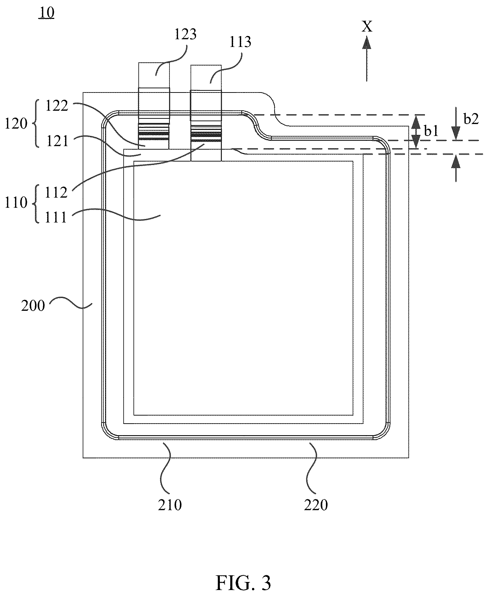

As shown in FIG. 3, FIG. 7, and FIG. 8, in some embodiments, the battery cell 10 further includes a separator 150. The separator 150 is disposed between the first electrode plate 110 and the second electrode plate 120. The separator 150 has a first end close to the first tab 112 and the second tab 122, the first end including a third zone 151 and a fourth zone 152. The third zone 151 protrudes from the fourth zone 152. When viewed in the extending direction X of the second tab 122, an orthographic projection of the third zone 151 is located within a projection of the first portion 210.

The third zone 151 of the separator 150 at the first end close to the first tab 112 and the second tab 122 protrudes from the fourth zone 152. When viewed in the extending direction X of the second tab 122, the orthographic projection of the third zone 151 is located within the projection of the first portion 210, so that the protruding third zone 151 can be accommodated in the space of a gap with larger spacing between the second coating zone 121 and the first portion 210, reducing the space occupied while providing better separation between the first electrode plate 110 and the second electrode plate 120.

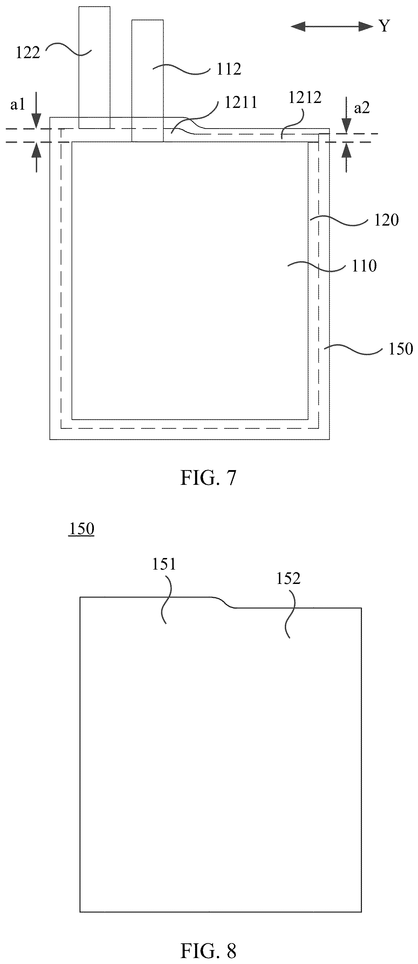

As shown in FIG. 3 and FIG. 7, the first tab 112 and the second tab 122 come out through a same first portion 210. The first tab 112 and the second tab 122 are disposed in a same first zone 1211, and the first zone 1211 is located on one side of the second electrode plate 120 in its width direction Y, so that a second zone 1212 is formed on another side of the second electrode plate 120 in its width direction Y to reduce the space occupied by the first electrode plate 110 and the second electrode plate 120, and the packaging process of the packaging bag 200 can be simplified.

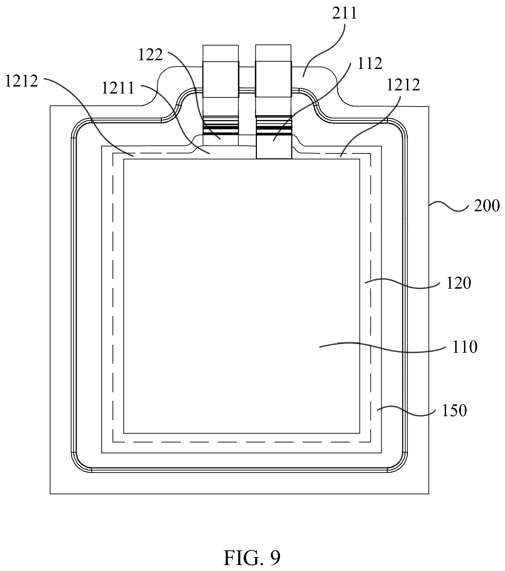

As shown in FIG. 9, the first tab 112 and the second tab 122 come out through a same first sealing portion 211. The first tab 112 and the second tab 122 are disposed in a same first zone 1211, and the first zone 1211 is located at the middle of the second electrode plate 120 in its width direction Y, so that two second zones 1212 are formed on two sides of the second electrode plate 120 in its width direction Y to reduce the space occupied by the first electrode plate 110 and the second electrode plate 120, and the packaging process of the packaging bag 200 can be simplified.

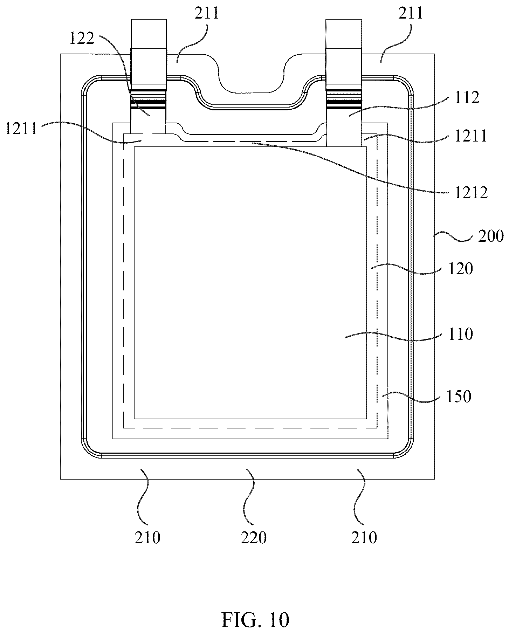

As shown in FIG. 10, in some other embodiments, two first portions 210 are provided, the two first portions 210 are spaced apart in the width direction Y of the battery cell 10, the first tab 112 comes out through one first sealing portion 211, the second tab 122 comes out through another first sealing portion 211, and the first tab 112 and the second tab 122 are respectively disposed in two first zones 1211. The two first zones 1211 are respectively located on two sides of the second electrode plate 120 in its width direction Y, so that one second zone 1212 is formed between the two first zones 1211 to reduce the space occupied by the first electrode plate 110 and the second electrode plate 120.

Two first portions 210 are provided, the two first portions 210 are spaced apart in the width direction Y of the battery cell 10, the first tab 112 comes out through one first sealing portion 211, and the second tab 122 comes out through another first sealing portion 211, facilitating the arrangement of the first tab 112 and the second tab 122 and the packaging of the packaging bag 200.

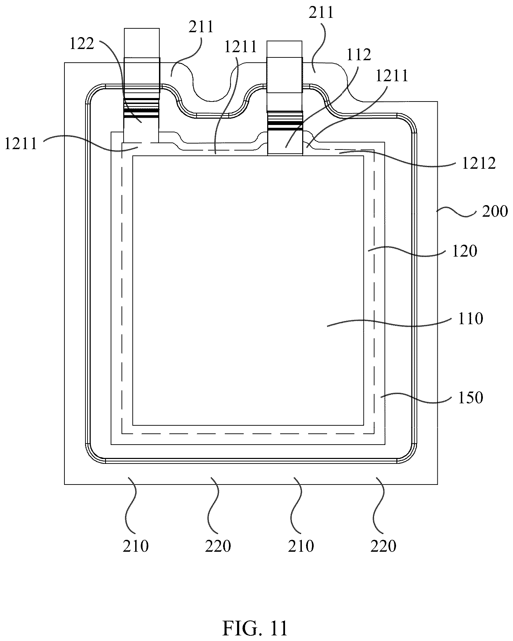

As shown in FIG. 11, in some other embodiments, two first portions 210 are provided, the two first portions 210 are spaced apart in the width direction Y of the battery cell 10, the first tab 112 comes out through one first portion 210, the second tab 122 comes out through the other first portion 210, and the first tab 112 and the second tab 122 are respectively disposed in two first zones 1211, where one first zone 1211 is located at one side of the second electrode plate 120 in its width direction Y, and the other first zone 1211 is located at the middle of the second electrode plate 120 in its width direction Y, so that two second zones 1212 are formed between the two first zones 1211 and on one side of the other first zone 1211, respectively, to reduce the space occupied by the first electrode plate 110 and the second electrode plate 120.

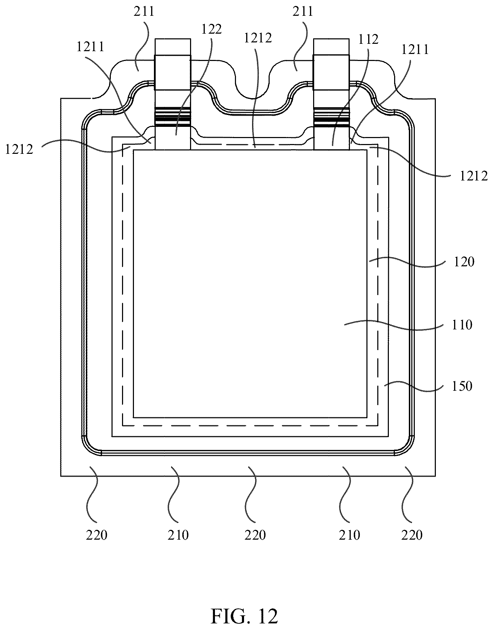

As shown in FIG. 12, in some other embodiments, two first portions 210 are provided, the two first portions 210 are spaced apart in the width direction Y of the battery cell 10, the first tab 112 comes out through one first portion 210, the second tab 122 comes out through the other first portion 210, and the first tab 112 and the second tab 122 are respectively disposed in two first zones 1211. The two first zones 1211 are located at the middle of the second electrode plate 120 in its width direction Y and spaced apart, so that three second zones 1212 are formed between the two first zones 1211 and on two sides of the two first zones 1211, respectively, to reduce the space occupied by the first electrode plate 110 and the second electrode plate 120.

In some embodiments, the packaging bag 200 may include a first packaging film 201 and a second packaging film 202. The first packaging film 201 and the second packaging film 202 are joined and edged to form a first sealing portion 211 and a second sealing portion 221.

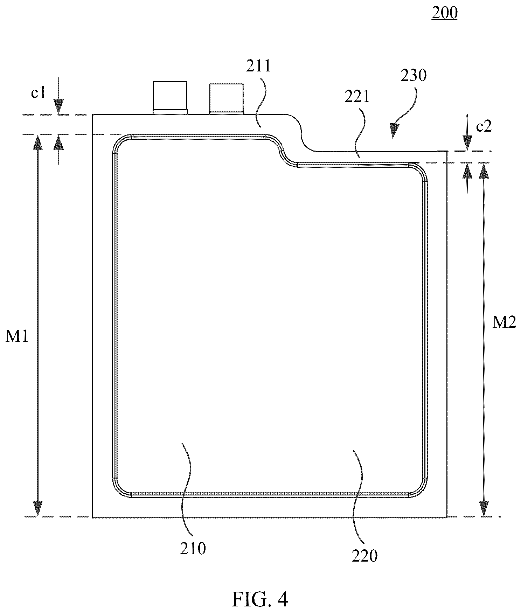

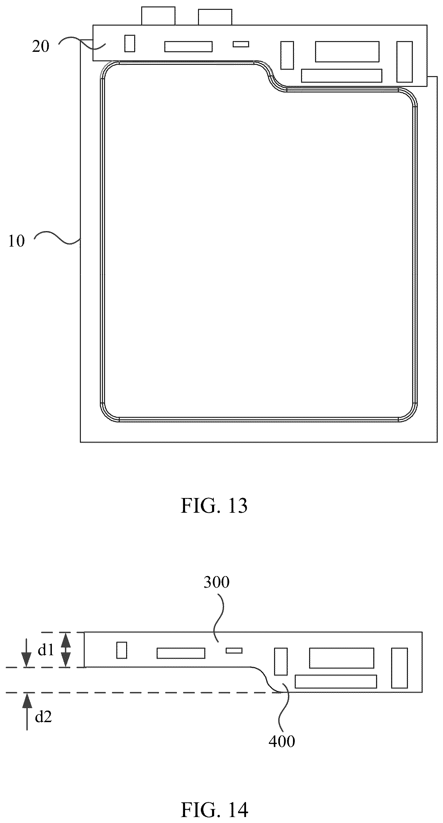

As shown in FIG. 4, FIG. 13, and FIG. 14, an embodiment of this application further provides a battery including the battery cell 10 and the protection board 20 provided in any of the foregoing embodiments. The protection board 20 is disposed on the packaging bag 200 of the battery cell 10, and the protection board 20 includes a main body portion 300 and a convex portion 400. The convex portion 400 protrudes from the main body portion 300 in a direction away from the extending direction X of the first tab 112, and the convex portion 400 is embedded into the first concave portion 230 of the battery cell 10.

The first concave portion 230 is formed on an outer surface of the packaging bag 200, and the convex portion 400 of the protection board 20 is embedded in the first concave portion 230, so that the structure of the battery can be more compact, and the energy density of the battery can be increased, thereby improving the endurance of the electric apparatus. The battery may include a plurality of battery cells. The plurality of battery cells 10 may be connected in series, parallel, or series and parallel, and being connected in series and parallel means a combination of series and parallel connections of the plurality of battery cells 10. The plurality of battery cells 10 may be directly connected in series, parallel, or series and parallel together to form a battery cell pack. Certainly, a plurality of battery cells 10 may be connected in series, parallel, or series and parallel first to form a battery cell pack.

In some embodiments, a dimension of the main body portion 300 in the extending direction X of the first tab 112 is denoted as d1, satisfying 1.5 mm ≤ d1 ≤ 15 mm. For example, d1 is 1.5 mm, 7 mm, 15 mm, or the like. This facilitates the arrangement of components on the main body portion 300 and can reduce the space occupied. If d1 is small (for example, less than 1.5 mm), it is difficult to dispose components on the main body portion 300; or if d1 is large (for example, greater than 15 mm), the space occupied is large, and this is not conducive to increasing the energy density of the battery.

In some embodiments, a dimension of the convex portion 400 in the extending direction X of the first tab 112 is denoted as d2, satisfying 0 < d2 ≤ a1 - a2 + b1 - b2 + c1 - c2 mm, so that the convex portion 400 can fit the first concave portion 230 of the packaging bag 200 of the battery cell 10, reducing the space occupied by the battery and facilitating the arrangement of components on the convex portion 400. If d2 is small (for example, equal to 0), the convex portion 400 cannot fit the first concave portion 230 of the packaging bag 200 of the battery cell 10, the space occupied by the protection board 20 is increased, so that the space occupied by the battery is increased, and this is not conducive to increasing the energy density of the battery. If d2 is large (for example, greater than a1 - a2 + b1 - b2 + c1 - c2 mm), the convex portion 400 also cannot fit the first concave portion 230 of the packaging bag 200 of the battery cell 10, causing a gap between the main body portion 300 and the packaging bag 200 and a waste of space, and this is not conducive to increasing the energy density of the battery.

In some embodiments, the dimension of the battery satisfies 0 < d2 ≤ (a1 - a2 + b1 - b2 + c1 - c2), enabling a better fit between the dimensions of the protection board 20 and the battery cell 10.

In some embodiments, the protection board 20 can be provided with components of greater thickness such as MOS (Metal-Oxide-Semiconductor Field-Effect Transistor), MOSFET (metal oxide semiconductor field-effect transistor) elements, and with the components of greater thickness such as the MOS elements provided on the convex portion 400, the space of the first concave portion 230 of the battery cell 10 can be utilized, helping to reduce the space occupied by the battery.

Refer to Table 1 below. Table 1 provides a comparison of the energy density W of batteries with different dimension data in multiple examples provided in this application and the energy densities W of batteries with different dimension data in multiple comparative examples. The following conclusions can be drawn from Table 1.
(1) Referring to Examples 1 to 10, for battery cells, the risk that the active material coating on the bottom end of the first tab comes into contact with the second electrode plate 120 can be reduced with a proper a1. On the basis of this, the value of a2 is reduced, the space utilization of battery cells is improved, and with a larger a1 - a2 in the range of 0.2 mm to 2.5 mm, the energy density of battery cells is greater, while with a larger a1 - a2 in the range of 2.5 mm to 4 mm, the space utilization of battery cells is decreased and the energy density of battery cells is smaller. For the battery cell in Comparative example 1, no concave portion is designed, and the first zone and the second zone extend beyond the first electrode plate by a same dimension, so that the battery cell protection board cannot utilize the excess space of the battery cell, resulting in a low energy density of the battery cell. In Comparative example 2, the energy density of the battery cell is small, and the value of a1 is too small, so there is a risk that the active material coating on the bottom end of the first tab comes into contact with the second electrode plate 120.
(2) Referring to Examples 8, 11 to 19 and Comparative example 3, for the battery cells, with a larger b1 - b2 in the range of 0.3 mm to 7 mm, the space utilization of battery cells is higher and the energy density of battery cells is greater, and when b1 - b2 exceeds 7 mm, there is space utilization loss in the first portion, and the energy density becomes smaller.
(3) Referring to Examples 20 to 26 and Examples 29 and 30, when d2 ≤ a1 - a2 + b1 - b2 + c1 - c2 is satisfied and c1 - c2 is in the range of 0.5 mm to 3 mm, the space utilization of the battery cells is high and the energy density is increased; when c1 - c2 is 0.2 mm, the width of the second sealing portion is too large, there is space utilization loss, and the energy density becomes smaller; and when c1 - c2 is 3.2 mm, the dimension of the second sealing portion is too small, resulting in sealing failure.

**Table 1 (a1, a2, b1, b2, c1, c2, d1, and d2 all in unit of mm, and energy density W in unit of Wh/L)**

| | a1 | a2 | a1 - a2 | b1 | b2 | b1 - b2 | c1 | c2 | c1 - c2 | d2 | d1 | W |
|---|---|---|---|---|---|---|---|---|---|---|---|---|
| Example 1 | 3 | 2.2 | 0.8 | 7.5 | 0.5 | 7 | 4.5 | 4.5 | 0 | 7.8 | 4.5 | 684.8 |
| Example 2 | 3 | 2.8 | 0.2 | 7.5 | 0.5 | 7 | 4.5 | 4.5 | 0 | 7.2 | 4.5 | 684.0 |
| Example 3 | 3 | 2.5 | 0.5 | 7.5 | 0.5 | 7 | 4.5 | 4.5 | 0 | 7.5 | 4.5 | 684.5 |
| Example 4 | 3 | 2 | 1 | 7.5 | 0.5 | 7 | 4.5 | 4.5 | 0 | 8 | 4.5 | 685.0 |
| Example 5 | 3 | 1.8 | 1.2 | 7.5 | 0.5 | 7 | 4.5 | 4.5 | 0 | 8.2 | 4.5 | 685.7 |
| Example 6 | 3 | 1.5 | 1.5 | 7.5 | 0.5 | 7 | 4.5 | 4.5 | 0 | 8.5 | 4.5 | 686.0 |
| Example 7 | 3 | 1.3 | 1.7 | 7.5 | 0.5 | 7 | 4.5 | 4.5 | 0 | 8.7 | 4.5 | 686.5 |
| Example 8 | 3 | 0.5 | 2.5 | 7.5 | 0.5 | 7 | 4.5 | 4.5 | 0 | 9.5 | 4.5 | 687.0 |
| Example 9 | 4 | 0.5 | 3.5 | 7.5 | 0.5 | 7 | 4.5 | 4.5 | 0 | 10.5 | 4.5 | 684.0 |
| Example 10 | 4.5 | 0.5 | 4 | 7.5 | 0.5 | 7 | 4.5 | 4.5 | 0 | 11 | 4.5 | 683.0 |
| Example 11 | 3 | 0.5 | 2.5 | 7.5 | 7.2 | 0.3 | 4.5 | 4.5 | 0 | 2.8 | 4.5 | 669.0 |
| Example 12 | 3 | 0.5 | 2.5 | 7.5 | 7 | 0.5 | 4.5 | 4.5 | 0 | 3 | 4.5 | 671.0 |
| Example 13 | 3 | 0.5 | 2.5 | 7.5 | 6.7 | 0.8 | 4.5 | 4.5 | 0 | 3.3 | 4.5 | 673.0 |
| Example 14 | 3 | 0.5 | 2.5 | 7.5 | 6.3 | 1.2 | 4.5 | 4.5 | 0 | 3.7 | 4.5 | 675.0 |
| Example 15 | 3 | 0.5 | 2.5 | 7.5 | 5.8 | 1.7 | 4.5 | 4.5 | 0 | 4.2 | 4.5 | 677.0 |
| Example 16 | 3 | 0.5 | 2.5 | 7.5 | 5.5 | 2 | 4.5 | 4.5 | 0 | 4.5 | 4.5 | 679.0 |
| Example 17 | 3 | 0.5 | 2.5 | 7.5 | 5 | 2.5 | 4.5 | 4.5 | 0 | 5 | 4.5 | 681.0 |
| Example 18 | 3 | 0.5 | 2.5 | 7.5 | 3.5 | 4 | 4.5 | 4.5 | 0 | 6.5 | 4.5 | 683.0 |
| Example 19 | 3 | 0.5 | 2.5 | 7.5 | 1 | 6.5 | 4.5 | 4.5 | 0 | 9 | 4.5 | 685.0 |
| Example 20 | 3 | 0.5 | 2.5 | 7.5 | 0.5 | 7 | 4.5 | 4 | 0.5 | 10 | 4.5 | 687.6 |
| Example 21 | 3 | 0.5 | 2.5 | 7.5 | 0.5 | 7 | 4.5 | 3.7 | 0.8 | 10.3 | 4.5 | 688.0 |
| Example 22 | 3 | 0.5 | 2.5 | 7.5 | 0.5 | 7 | 4.5 | 3.5 | 1 | 10.5 | 4.5 | 688.2 |
| Example 23 | 3 | 0.5 | 2.5 | 7.5 | 0.5 | 7 | 4.5 | 3 | 1.5 | 11 | 4.5 | 688.6 |
| Example 24 | 3 | 0.5 | 2.5 | 7.5 | 0.5 | 7 | 4.5 | 2.5 | 2 | 11.5 | 4.5 | 689.0 |
| Example 25 | 3 | 0.5 | 2.5 | 7.5 | 0.5 | 7 | 4.5 | 2 | 2.5 | 12 | 4.5 | 689.5 |
| Example 26 | 3 | 0.5 | 2.5 | 7.5 | 0.5 | 7 | 4.5 | 1.5 | 3 | 12.5 | 4.5 | 690.0 |
| Example 27 | 3 | 0.5 | 2.5 | 7.5 | 0.5 | 7 | 4.5 | 3.5 | 1 | 10 | 4.5 | 688.2 |
| Example 28 | 3 | 0.5 | 2.5 | 7.5 | 0.5 | 7 | 4.5 | 3.5 | 1 | 9 | 4.5 | 688.2 |
| Example 29 | 3 | 0.5 | 2.5 | 7.5 | 0.5 | 7 | 4.5 | 4.3 | 0.2 | 2.5 | 5.1 | 687.2 |
| Example 30 | 3 | 0.5 | 2.5 | 7.5 | 0.5 | 7 | 4.5 | 1.3 | 3.2 | 2.5 | 6.2 | 690.5 |
| Example 31 | 3 | 0.5 | 2.5 | 7.5 | 0.5 | 7 | 4.5 | 2.5 | 2 | 3.3 | 4.6 | 688.0 |
| Example 32 | 3 | 0.5 | 2.5 | 7.5 | 0.5 | 7 | 4.5 | 2.5 | 2 | 11.6 | 4.5 | 689.4 |
| Comparative example 1 | 3 | 3 | 0 | 7.5 | 7.5 | 0 | 4.5 | 4.5 | 0 | 4.5 | 4.5 | 667.0 |
| Comparative example 2 | 0.5 | 0.5 | 0 | 7.5 | 7.5 | 0 | 4.5 | 4.5 | 0 | 4.5 | 4.5 | 669.0 |
| Comparative example 3 | 3 | 0.5 | 2.5 | 7.5 | 7.3 | 0.2 | 4.5 | 4.5 | 0 | 4.5 | 4.5 | 667.2 |

(4) Referring to Examples 22, 27, and 28, d2 ≤ a1 - a2 + b1 - b2 + c1 - c2, not affecting the energy density of the battery cells. In Example 32, d2 > a1 - a2 + b1 - b2 + c1 - c2, so there is additional space occupied by the protection board, resulting in an energy density loss. In Example 31, the dimension d1 of the main body portion of the protection board in the extending direction of the first tab is greater than the dimension c1 of the first sealing portion in the extending direction of the first tab, so there is additional space occupied by the protection board, resulting in an energy density loss.

It can be seen that the batteries provided in the examples of this application can increase the energy density of the battery, thereby improving the endurance of the electric apparatus.

An embodiment of this application further provides an electric apparatus including the battery according to any one of the foregoing embodiments, where the battery is configured to supply electric energy.

The foregoing descriptions are merely specific embodiments of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

It should be noted that relational terms such as "first" and "second" are only used to distinguish one entity or operation from another entity or operation, and do not necessarily require or imply that there is any such actual relationship or order between these entities or operations. Terms "comprise", "include", or any other variations thereof are intended to cover non-exclusive inclusions, such that a process, method, article or device including a series of elements not only includes these elements, but also includes other elements which are not expressly listed, or further includes elements which are inherent to such process, method, article or device. Under the condition of no more limitations, an element defined by the statement "including one..." does not exclude existence of the same other elements in a process, a method, an article or a device including the element.

## Claims

1. A battery cell, comprising:
a packaging bag comprising a first portion and a second portion, wherein the second portion is connected to the first portion, and the second portion is recessed in a first direction with respect to the first portion to form a first concave portion on an outer surface of the packaging bag; and
a first electrode plate and a second electrode plate that are accommodated within the packaging bag, wherein the first electrode plate comprises a first coating zone and a first tab connected to the first coating zone; the second electrode plate comprises a second coating zone, the second coating zone comprises a first zone and a second zone, and the second zone is recessed in the first direction with respect to the first zone to form a second concave portion on the second electrode plate; a second tab is connected to the first zone; and the first tab is connected to a first conductive member, the second tab is connected to a second conductive member, the first portion contains a first sealing portion, the second portion contains a second sealing portion, and the first conductive member and the second conductive member come out through the first sealing portion;
wherein in an extending direction of the first tab, an orthographic projection of the first zone is located within a projection of the first portion; in the extending direction of the first tab, a dimension by which the first zone extends beyond the first electrode plate is denoted as a1, and a dimension by which the second zone extends beyond the first electrode plate is denoted as a2; and in the extending direction of the first tab, a distance from the second coating zone to the first portion is denoted as b1, and a distance from the second coating zone to the second portion is denoted as b2, satisfying: 0.2 mm ≤ a1 - a2 ≤ 4 mm, 0.1 mm ≤ a2, 0.3 mm ≤ b1 - b2 ≤ 7 mm, and b2 ≤ 3 mm; wherein the extending direction of the first tab is opposite to the first direction.

2. The battery cell according to claim 1, wherein in the extending direction of the first tab, a dimension of the first portion is denoted as M1, a dimension of the second portion is denoted as M2, and a dimension of the first zone is denoted as L1, satisfying L1 ≤ M2 ≤ M1.

3. The battery cell according to claim 1, wherein in the extending direction of the first tab, a dimension of the first sealing portion is denoted as c1, and a dimension of the second sealing portion is denoted as c2, satisfying 0.5 mm ≤ c1 - c2 ≤ 3 mm and 1.5 mm ≤ c2.

4. The battery cell according to claim 1, wherein 0.5 mm ≤ a1 - a2 ≤ 1.5 mm.

5. The battery cell according to claim 1, wherein 0.3 mm ≤ a1 ≤ 7 mm and a2 ≤ 3 mm.

6. The battery cell according to claim 1, wherein 0.5 mm ≤ b1 - b2 ≤ 2 mm.

7. The battery cell according to claim 1, wherein 0.6 mm ≤ b1 ≤ 10 mm and 0.2 mm ≤ b2.

8. The battery cell according to claim 3, wherein 2.5 mm < c1 ≤ 4.5 mm and c2 ≤ 3 mm.

9. The battery cell according to claim 1, wherein the first sealing portion and the second sealing portion are located at a same end in the extending direction of the first tab.

10. The battery cell according to claim 1, wherein the first electrode plate is a positive electrode plate and the second electrode plate is a negative electrode plate; alternatively, the first electrode plate is a negative electrode plate and the second electrode plate is a positive electrode plate.

11. The battery cell according to claim 1, wherein in the extending direction of the first tab, a dimension of the first zone is denoted as L1, and a dimension of the second zone is denoted as L2, satisfying 0.2 mm ≤ L1 - L2 ≤ 2.9 mm.

12. The battery cell according to claim 1, wherein the first electrode plate is rectangular.

13. The battery cell according to claim 1, wherein the battery cell further comprises a separator, the separator is disposed between the first electrode plate and the second electrode plate, the separator has a first end close to the first tab and the second tab, the first end comprises a third zone and a fourth zone, the third zone protrudes from the fourth zone, and when viewed in the extending direction of the first tab, an orthographic projection of the third zone is located within the projection of the first portion.

14. The battery cell according to claim 1, wherein two first portions are provided, the two first portions are spaced apart in a width direction of the battery cell, the first conductive member comes out through one first portion, and the second conductive member comes out through the other first portion.

15. A battery, comprising:
the battery cell according to any one of claims 1 to 14; and
a protection board, wherein the protection board is disposed on the packaging bag, the protection board comprises a main body portion and a convex portion, the convex portion protrudes from the main body portion in a direction away from the extending direction of the first tab, and the convex portion is embedded into the first concave portion.

16. The battery according to claim 15, wherein in the extending direction of the first tab, a dimension of the first sealing portion is denoted as c1, a dimension of the second sealing portion is denoted as c2, a dimension of the main body portion in the extending direction of the first tab is denoted as d1, and a dimension of the convex portion in the extending direction of the first tab is denoted as d2, satisfying 1.5 mm ≤ d1 ≤ 15 mm and 0 mm < d2 ≤ a1 - a2 + b1 - b2 + c1 - c2.

17. An electric apparatus, comprising the battery according to claim 15 or 16, wherein the battery is configured to supply electric energy.
